# EUROPEAN PATENT APPLICATION

(11) **EP 4 391 556 A1**
(43) Date of publication of application: **26.06.2024**
(21) Application number: 22916473.6
(22) Date of filing: 30.11.2022
(51) Int. Cl.: H04N 21/431, H04N 21/485, H04N 7/01

(54) **ELECTRONIC DEVICE DISPLAYING PLURALITY OF PIECES OF CONTENT AND OPERATION METHOD THEREFOR**

(30) Priority: 30.12.2021 KR 20210193412
(71) Applicant: Samsung Electronics Co., Ltd., Suwon-si, Gyeonggi-do 16677 (KR)
(72) Inventor: YOO, Hayeon, Suwon-si, Gyeonggi-do 16677 (KR); LEE, Woonghee, Suwon-si, Gyeonggi-do 16677 (KR); JEON, Byungjeong, Suwon-si, Gyeonggi-do 16677 (KR); KIM, Younga, Suwon-si, Gyeonggi-do 16677 (KR)
(74) Representative: Appleyard Lees IP LLP
(86) International application number: PCT/KR2022/019214
(87) International publication number: WO 2023/128327

(57) **Abstract**

An operation method for an electronic device may comprise the steps of: receiving a request for a multi-view function for displaying a plurality of pieces of content, the request being received from a user interface while the electronic device is operating in a first display mode; receiving, from the user interface, a selection of the type of multi-view layout to be provided in the multi-view function; automatically rotating a display of the electronic device when the type of multi-view layout corresponds to a second display mode; switching the display mode of the electronic device to the second display mode when the display automatically rotates; and displaying a plurality of pieces of content in the second display mode by using the multi-view layout, wherein the first display mode may be one of landscape mode or portrait mode, and the second display mode may be the other.

## Description

### TECHNICAL FIELD

The disclosure relates to an electronic device that provides a multi view function capable of displaying multiple contents, and an operating method of the electronic device.

### BACKGROUND ART

The types of digital content popular with consumers has become diversified, and therefore, an electronic devices having a display such as a television may support both a landscape mode and a portrait mode. Additionally, some electronic devices are configured to provide a multi view function that is able to display multiple instances of digital content in a plurality of screen configurations in one display. The multiple instances of digital content provided via the multi view function may include horizontally displayed digital content, vertically displayed digital content, and a combination of horizontally and vertically displayed digital content. In order to provide various types of digital content in a plurality of screen configurations on one display, the configuration of a multi view layout may also be varied.

Since traditional multi view capable electronic devices can be cumbersome to use, there is a need for a method of displaying multiple types of digital content in a way that enhances user convenience when a user makes use of various multi view layouts provided by electronic devices.

### DESCRIPTION OF EMBODIMENTS

### TECHNICAL PROBLEM

Provided are an electronic device capable of displaying multiple contents by adaptively changing a display mode of the electronic device according to the configuration of contents to be displayed, and an operating method of the electronic device.

### TECHNICAL SOLUTION TO PROBLEM

According to an embodiment of the disclosure, method for displaying multiple pieces of content on a single display of an electronic device may be provided. The method may include receiving, from a user interface, a request for a multi view function for displaying the multiple pieces of content while the electronic device operates in a first display mode, receiving, from the user interface, a selection of a type of a multi view layout to be provided in the multi view function, automatically rotating the display of the electronic device when the type of the multi view layout corresponds to a second display mode, switching a display mode of the electronic device to the second display mode when the display is automatically rotated, and displaying the multiple pieces of content in the second display mode, by using the multi view layout, and the first display mode is any one of a landscape mode and a portrait mode, and the second display mode is the other one of the landscape mode and the portrait mode.

The type of the multi view layout may include a horizontal layout and a vertical layout.

The receiving the selection of the type of multi view layout includes receiving an input for selecting a multi view layout to be executed from among at least one multi view layout and identifying a type of the selected multi view layout.

The method may further include comparing whether the requested multi view layout is the same as a previously stored multi view layout, and based on a result of the comparing, displaying a user interface for storing the requested multi view layout as a customized multi view layout.

The method may further include comparing whether the requested multi view layout is the same as a previously stored multi view layout, and when the requested multi view layout is different from the previously stored multi view layout, storing the requested multi view layout.

The method may further include displaying a user interface for generating a customized multi view layout when the receiving the request for the multi view function is received, generating a customized multi view layout to be provided in the multi view function based on a user input, and storing the generated customized multi view layout in a memory.

The method may further include, when the customized multi view layout is stored, identifying a type of the customized multi view layout.

The method may further include displaying a thumbnail of the at least one multi view layout so as to receive the input for selecting the multi view layout to be executed, when the request for the multi view function is received.

The at least one multi view layout may include at least one of a multi view layout previously set in the electronic device or a customized multi view layout generated by a user, and the displaying of the thumbnail of the multi view layout may include classifying and displaying a thumbnail of the previously set multi view layout and a thumbnail of the customized multi view layout.

The method may further include identifying a single piece of content of the multiple pieces of content displayed on the electronic device while the electronic device operates in the first display mode, and the displaying of the multiple pieces of content may include displaying the single piece of content and one or more pieces of content related to the single piece of content.

According to an embodiment of the disclosure, an electronic device for displaying multiple pieces of content on a display of the electronic device may be provided. The electronic device may include the display, a memory storing one or more instructions, and one or more processors configured to execute the one or more instructions stored in the memory to receive, from a user interface, a request for a multi view function for displaying the multiple pieces of content while the electronic device operates in a first display mode, receive, from the user interface, a selection of a type of a multi view layout to be provided in the multi view function, automatically rotate the display of the electronic device when the type of the multi view layout corresponds to a second display mode, switch a display mode of the electronic device to the second display mode when the display is automatically rotated, and control the display to display the multiple pieces of content in the second display mode, by using the multi view layout, and the first display mode is any one of a landscape mode and a portrait mode, and the second display mode is the other one of the landscape mode and the portrait mode.

According to an embodiment of the disclosure, provided is a non-transitory computer readable recording medium having recorded thereon a program for executing any one of the methods, performed by an electronic device, of displaying multiple contents.

### BRIEF DESCRIPTION OF DRAWINGS

FIG. 1 is a diagram schematically illustrating an operation of an electronic device that displays multiple contents according to an embodiment of the disclosure.
FIG. 2 is a diagram illustrating types of a multi view layout provided by an electronic device according to an embodiment of the disclosure.
FIG. 3 is a diagram illustrating display modes of an electronic device and an operation of the electronic device in each display mode according to an embodiment of the disclosure.
FIG. 4 is a flowchart illustrating an operation of an electronic device that displays multiple contents according to an embodiment of the disclosure.
FIG. 5 is a diagram illustrating multiple contents provided by an electronic device according to an embodiment of the disclosure.
FIG. 6 is a diagram illustrating a method, performed by an electronic device, of executing a multi view function according to an embodiment of the disclosure.
FIG. 7 is a diagram illustrating multi view layouts provided by an electronic device according to an embodiment of the disclosure.
FIG. 8 is a flowchart illustrating an operation of an electronic device which generates a customized multi view layout according to an embodiment of the disclosure.
FIG. 9 is a flowchart illustrating an operation of an electronic device which automatically generates a customized multi view layout according to an embodiment of the disclosure.
FIG. 10 is a flowchart illustrating an operation of an electronic device which provides multiple contents using a customized multi view layout according to an embodiment of the disclosure.
FIG. 11 is a flowchart illustrating an operation of an electronic device which generates a customized multi view layout based on a user input and displays multiple contents according to an embodiment of the disclosure.
FIG. 12 is a diagram illustrating an operation of an electronic device which generates a customized multi view layout based on a user input according to an embodiment of the disclosure.
FIG. 13 is a diagram illustrating a configuration of a multi view menu provided by an electronic device according to an embodiment of the disclosure.
FIG. 14 is a diagram illustrating an operation of an electronic device which uses a previously set multi view layout according to an embodiment of the disclosure.
FIG. 15 is a diagram illustrating another configuration of a multi view menu provided by an electronic device according to an embodiment of the disclosure.
FIG. 16 is a flowchart illustrating an operation of an electronic device which provides a plurality of related contents in a multi view mode according to an embodiment of the disclosure.
FIG. 17 is a diagram illustrating an operation of an electronic device which provides a plurality of related contents in a multi view mode according to an embodiment of the disclosure.
FIG. 18 is a block diagram illustrating a configuration of an electronic device according to an embodiment of the disclosure.

### MODE OF DISCLOSURE

Throughout the disclosure, the expression "at least one of a, b or c" indicates only a, only b, only c, both a and b, both a and c, both b and c, all of a, b, and c, or variations thereof.

The terms used in the present specification will be briefly described and then the disclosure will be described in detail.

In the disclosure, general terms that have been widely used nowadays are selected, when possible, in consideration of functions of the disclosure, but non-general terms may be selected according to the intentions of technicians in the art, precedents, or new technologies, etc. Some terms may be arbitrarily chosen by the present applicant. In this case, the meanings of these terms will be explained in corresponding parts of the disclosure in detail. Thus, the terms used herein should be defined not based on the names thereof but based on the meanings thereof and the whole context of the disclosure.

The singular expression may include the plural expression unless the context clearly dictates otherwise. Terms used herein, including technical or scientific terms, may have the same meanings as commonly understood by one of ordinary skill in the art described herein. Also, terms including an ordinal number such as 'first' or 'second' used herein may be used to describe various components, but the components should not be limited by the terms. The above terms are used only for the purpose of distinguishing one component from another.

It will be understood that when a component is referred to as "including" another component, the component may further include other components unless mentioned otherwise. Terms such as "unit", "module," etc., when used herein, represent units for processing at least one function or operation, which may be implemented by hardware, software, or a combination of hardware and software.

Hereinafter, embodiments of the disclosure will be described in detail with reference to the accompanying drawings, so that the embodiments of the disclosure may be easily implemented by those of ordinary skill in the art. However, the disclosure may be embodied in many different forms and is not limited to the embodiments of the disclosure set forth herein. For clarity, parts not related to explaining the disclosure are omitted in the drawings, and like components are denoted by like reference numerals throughout the specification.

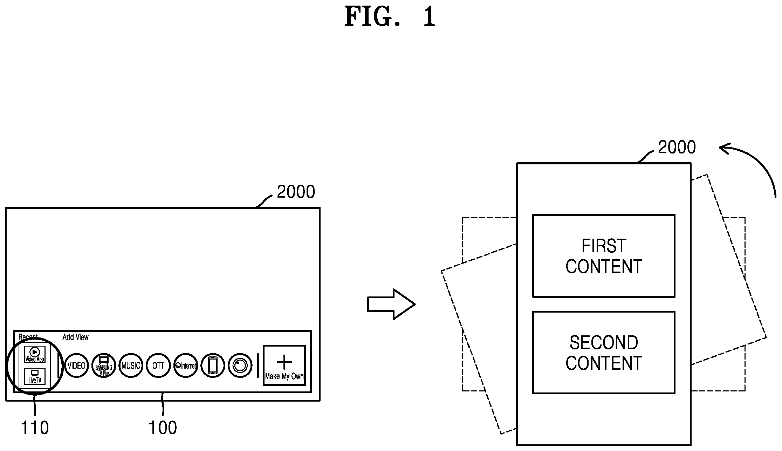

FIG. 1 is a diagram schematically illustrating an operation of an electronic device that displays multiple contents according to an embodiment of the disclosure.

In an embodiment of the disclosure, an electronic device 2000 may be a device including a display to output an image and/or a moving image. For example, the electronic device 2000 may include a smart TV, a smart phone, a tablet PC, a laptop PC, a frame type display, etc. However, the disclosure is not limited thereto, and the electronic device 2000 may be implemented in various types and forms of electronic devices including a display.

In an embodiment of the disclosure, the display of the electronic device 2000 may be a rotatable display to provide display modes including a landscape mode and a portrait mode. Among the display modes, the landscape mode refers to a state where the display of the electronic device 2000 is arranged such that a horizontal length of the display is greater than a vertical length of the display,
and the portrait mode refers to a state where the display of the electronic device 2000 is arranged such that the vertical length of the display is greater than the horizontal length of the display..

The electronic device 2000 may rotate the display by using a motor included in the electronic device 2000 or may rotate the display by controlling a rotation module attachable to the display of the electronic device 2000.

In an embodiment of the disclosure, a multi view layout refers to a layout for displaying multiple pieces of content by configuring a plurality of windows on the display of the electronic device 2000. The multi view layout may be classified into a horizontal multi view layout and a vertical multi view layout. The horizontal type multi view layout refers to a layout for providing multiple pieces of content in the landscape mode of the electronic device 2000. The plurality of windows included in the horizontal multi view layout may include horizontal windows and/or a vertical windows. The vertical multi view layout refers to a layout for providing multiple pieces of content in the portrait mode of the electronic device 2000. The plurality of windows included in the vertical multi view layout may include horizontal windows or vertical windows.

In an embodiment of the disclosure, the electronic device 2000 may simultaneously display multiple pieces of content using the multi view layout. In this case, when the current display mode of the electronic device 2000 does not correspond to a type of the multi view layout, the electronic device 2000 may automatically rotate the display and display multiple contents using the multi view layout on the rotated display.

In an embodiment of the disclosure, the electronic device 2000 may display a multi view menu 100 when a multi view function is executed while operating in the landscape mode. The electronic device 2000 may execute the multi view function according to a user input for executing the multi view function. The electronic device 2000 may provide menu items for selecting the multi view layout to the multi view menu 100. When receiving a user input for selecting a multi view layout item provided by the multi view menu 100, the electronic device 2000 may display multiple contents using a multi view layout corresponding to the selected multi view layout item.

In FIG. 1, an example in which the selected multi view layout is a vertical multi view layout 110 will be described. Also, an example in which the vertical multi view layout 110 includes a first screen and a second screen will be described.

In an embodiment of the disclosure, when the vertical multi view layout 110 is selected in the electronic device 2000 which is operating in the landscape mode, the electronic device 2000 may automatically rotate the display such that the display mode of the electronic device 2000 switches from the landscape mode to the portrait mode. The electronic device 2000 may provide multiple pieces of content by using the vertical multi view layout 110 in the portrait mode. The electronic device 2000 may display first content on the first screen of the vertical type multi view layout 110 and display second content on the second screen.

Specific operations of the electronic device 2000 that displays multiple contents using the multi view layout will be understood in more detail with reference to drawings and descriptions corresponding thereto which will be described below.

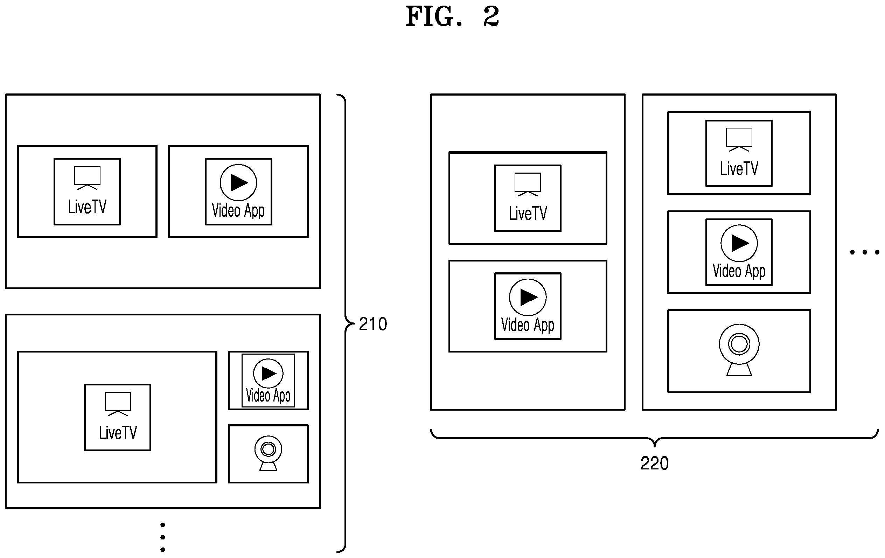

FIG. 2 is a diagram illustrating types of a multi view layout provided by the electronic device 2000 according to an embodiment of the disclosure.

According to an embodiment of the disclosure, the electronic device 2000 may provide the multi view layout of various configurations. For example, the electronic device 2000 may provide the multi view layout including a plurality of windows capable of displaying multiple pieces of content.

In an embodiment of the disclosure, the multi view layout may have a plurality of types.

In an embodiment of the disclosure, the multi view layout may be a horizontal type multi view layout 210. The horizontal multi view layout 210 is a multi view layout corresponding to a landscape mode among display modes of the electronic device 2000. The horizontal multi view layout 210 may include a plurality of windows. For example, two or more windows may be included in the horizontal multi view layout 210.

In an embodiment of the disclosure, each of the plurality of windows included in the horizontal multi view layout 210 may be a horizontal window and/or a vertical window. That is, in the horizontal multi view layout 210, the entire multi view screen including the plurality of windows is merely a horizontally long screen, regardless of whether the respective windows included in the horizontal multi view layout 210 are horizontal/vertical.

In an embodiment of the disclosure, the multi view layout may be a vertical multi view layout 220. The vertical multi view layout 220 is a multi view layout corresponding to a portrait mode among display modes of the electronic device 2000. The vertical multi view layout 220 may include a plurality of windows. For example, two or more windows may be included in the vertical multi view layout 220.

In an embodiment of the disclosure, each of the plurality of windows included in the vertical multi view layout 220 may be a horizontal window and/or vertical window. That is, in the vertical multi view layout 220, the entire multi view screen including the plurality of windows is merely a vertically long screen, regardless of whether the respective windows included in the horizontal multi view layout 210 are horizontal/vertical.

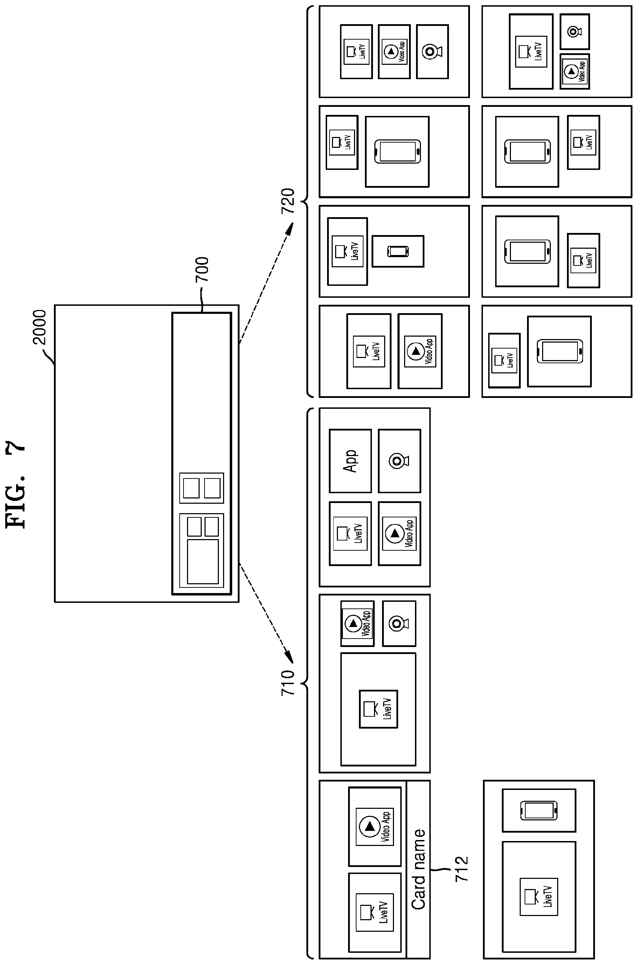

Specific window configurations of the horizontal multi view layout 210 and the vertical multi view layout 220 will be further described with reference to FIG. 7.

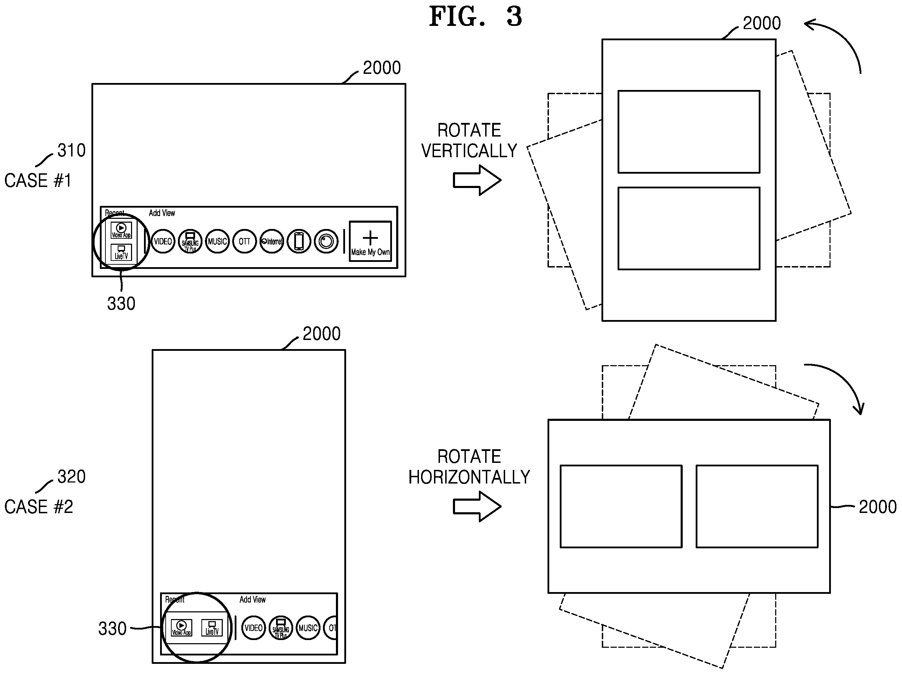

FIG. 3 is a diagram illustrating display modes of the electronic device 2000 and an operation of the electronic device 2000 according to each display mode according to an embodiment of the disclosure.

In an embodiment of the disclosure, the electronic device 2000 may identify execution of a multi view function while operating in a first display mode. When execution of the multi view function is identified, the electronic device 2000 may identify a type of a multi view layout 330 to be provided in the multi view function. Types of the multi view layout 330 may include, for example, a horizontal type and a vertical type. When the type of the multi view layout 330 corresponds to a second display mode, the electronic device 2000 may rotate a display of the electronic device 2000 and switch a display mode of the electronic device 2000 to the second display mode. In an embodiment of the disclosure, the first display mode of the electronic device 2000 may be any one of a landscape mode and a portrait mode, and the second display mode may be the other one.

For example, referring to Case #1 310, the first display mode may be the landscape mode, and the second display mode may be the portrait mode. The electronic device 2000 may identify the execution of the multi view function while operating in the landscape mode, and identify the type of the multi view layout 330 to be provided in the multi view function. In some embodiments of the disclosure, there may be more than one multi view layout 330 provided by the electronic device 2000. When there are a plurality of multi view layouts 330, the electronic device 2000 may receive an input for selecting a multi view layout to be executed from among the plurality of multi view layouts.

In Case #1 310, the type of the multi view layout 330 may be the vertical multi view layout 330 corresponding to the portrait mode of the electronic device 2000. Because the multi view layout 330 corresponds to the portrait mode, the electronic device 2000 may rotate the display of the electronic device 2000 to be a display in a vertical direction. The electronic device 2000 may display multiple contents using the multi view layout 330 in the portrait mode. For example, the electronic device 2000 may display first content and second content in the portrait mode.

In another example, referring to Case #2 320, the first display mode may be the portrait mode, and the second display mode may be the landscape mode. The electronic device 2000 may identify the execution of the multi view function while operating in the portrait mode, and identify the type of the multi view layout 330 to be provided in the multi view function. In some embodiments of the disclosure, there may be more than one multi view layout 330 provided by the electronic device 2000. When there are a plurality of multi view layouts 330, the electronic device 2000 may receive an input for selecting a multi view layout to be executed from among the plurality of multi view layouts.

In Case #2 320, the type of the multi view layout 330 may be the horizontal multi view layout 330 corresponding to the landscape mode of the electronic device 2000. Because the multi view layout 330 corresponds to the landscape mode, the electronic device 2000 may rotate the display of the electronic device 2000 to be a display in a horizontal direction. The electronic device 2000 may display multiple contents using the multi view layout 330 in the landscape mode. For example, the electronic device 2000 may display the first content and the second content in the landscape mode.

An operation of the electronic device 2000 switching the first display mode to the second display mode has been described through examples of Case #1 310 and Case #2 320. As may be seen from the above examples, the first display mode and the second display mode only use ordinal numbers to distinguish different display modes. That is, when the first display mode is the landscape mode, the second display mode is the portrait mode, and when the first display mode is the portrait mode, the second display mode is the landscape mode.

In embodiments described below, the first display mode may be any one of the landscape mode and the portrait mode, and the second display mode may be the other one. For clearer explanation, in each of the embodiments of the disclosure, what is the first display mode used as an example will be mentioned.

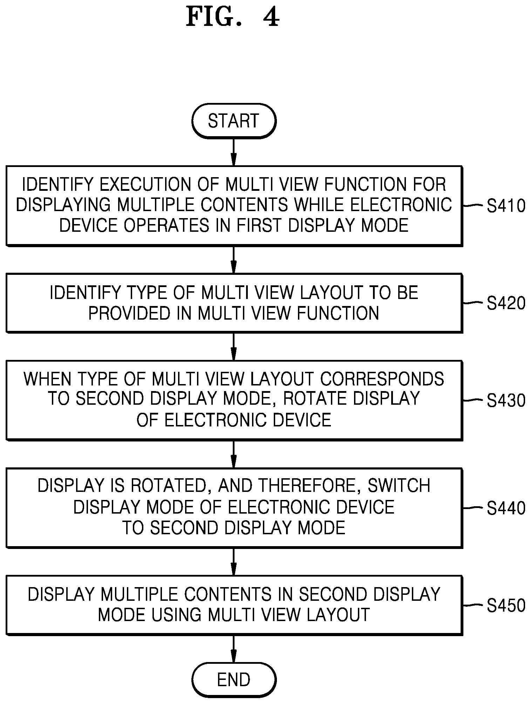

FIG. 4 is a flowchart illustrating an operation of the electronic device 2000 that displays multiple contents according to an embodiment of the disclosure.

In operation S410, the electronic device 2000 according to an embodiment of the disclosure may identify execution of a multi view function for displaying multiple contents while operating in a first display mode. The multi view function of the electronic device 2000 may be executed through various methods. For example, the electronic device 2000 may receive an execution command/signal of the multi view function from another device (e.g., a smartphone, a personal computer, etc.) connected to the electronic device 2000 wirelessly and/or by wire. In another example, the electronic device 2000 may receive the execution command/signal of the multi view function from a device (e.g., a remote controller, etc.) for controlling the electronic device 2000. In another example, the electronic device 2000 may receive an execution input of the multi view function from an input interface (e.g., a touch screen, etc.) of the electronic device 2000.

In operation S420, the electronic device 2000 according to an embodiment of the disclosure may identify a type of a multi view layout to be provided in the multi view function. Types of the multi view layout may include a horizontal type and a vertical type.

In an embodiment of the disclosure, there may be more than one multi view layout provided by the electronic device 2000. When there is one multi view layout stored in the electronic device 2000, the electronic device 2000 may identify the type of the multi view layout. When there are two or more multi view layouts stored in the electronic device 2000, the electronic device 2000 may receive a user input for selecting the multi view layout and identify the type of the selected multi view layout.

In operation S430, when the type of the multi view layout corresponds to a second display mode, the electronic device 2000 according to an embodiment of the disclosure may rotate a display of the electronic device 2000.

In an embodiment of the disclosure, the identified multi view layout type may be a type corresponding to the second display mode. Because the multi view function is executed while the electronic device 2000 is operating in the first display mode and the type of the multi view layout corresponds to the second display mode, the electronic device 2000 may rotate the display. Here, the rotation of the display refers to rotation for switching a display mode, for example, rotation from a landscape mode to a portrait mode or rotation from the portrait mode to the landscape mode.

In an embodiment of the disclosure, the identified type of the multi view layout may be a type corresponding to the first display mode. Because the multi view function is executed while the electronic device 2000 is operating in the first display mode and the type of the multi view layout corresponds to the first display mode, the electronic device 2000 may provide the multi view function without having to rotate the display. That is, when the type of the multi view layout corresponds to the first display mode, the electronic device 2000 may use the multi view layout corresponding to the first display mode to immediately provide multiple contents in the first display mode without performing operations which will be described below.

In operation S440, the display is rotated, and therefore, the electronic device 2000 according to an embodiment of the disclosure may switch the display mode of the electronic device 2000 to the second display mode. This is to use the multi view layout in the second display mode because the identified type of the multi view layout is the type corresponding to the second display mode.

In operation S450, the electronic device 2000 according to an embodiment of the disclosure may display multiple contents in the second display mode, using the multi view layout. The electronic device 2000 may provide multiple contents in the second display mode by using the multi view layout corresponding to the second display mode. The multiple contents may be two or more pieces of digital content. Sizes, orientations, and other characteristics of the multiple pieces of digital content to be displayed on the multi view layout may be determined according to the configuration of the multi view layout. For example, multiple contents may be provided as windows having different sizes. Also, multiple contents may be provided in different orientations (e.g., in a horizontal or vertical orientation).

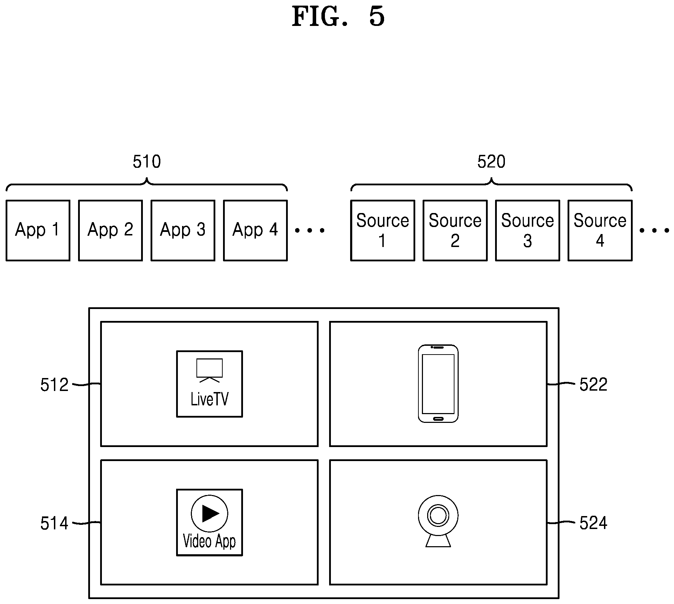

FIG. 5 is a diagram illustrating multiple contents provided by the electronic device 2000 according to an embodiment of the disclosure;

Referring to FIG. 5, an example in which a type of a multi view layout is a horizontal type will be described.

In an embodiment of the disclosure, the electronic device 2000 may provide the multiple contents using the multi view layout. The multiple contents provided on the multi view layout may be provided from applications 510 and/or sources 520.

In an embodiment of the disclosure, the applications 510 may be applications capable of providing contents. The applications 510 may include, for example, an over-the-top (OTT) media service application, a video application, a game application, or other multimedia application, but are not limited thereto.

In an embodiment of the disclosure, the sources 520 refer to other types of electronic devices connected to and used by the electronic device 2000, and provide input contents to the electronic device 2000. The sources 520 may be, for example, game consoles, set-top boxes, desktop PCs, laptop PCs, etc., but are not limited thereto.

In an embodiment of the disclosure, the multi view layout may be a layout including four horizontal windows and providing four pieces of digital content. Windows corresponding to the four contents are respectively referred to as first to fourth windows.

For example, a first window of the multi view layout may be a live TV application 512. The first window may provide live broadcast content using the TV application 512. A second window of the multi view layout may be a smartphone 522. The second window may provide contents such as smartphone screen mirroring by connecting the smartphone 522 as a source. A third window of the multi view layout may be a video application 514. The third window may provide video content using the video application 514. A fourth window of the multi view layout may be a USB camera 524. The fourth window may provide content such as a live camera by connecting the USB camera 524 as a source.

Meanwhile, the first to fourth windows described above are merely examples for describing the multi view layout. The window displayed on the multi view layout may be any configuration that combines two or more windows in different sizes and directions, and displays content provided by applications and/or sources on each of two or more windows.

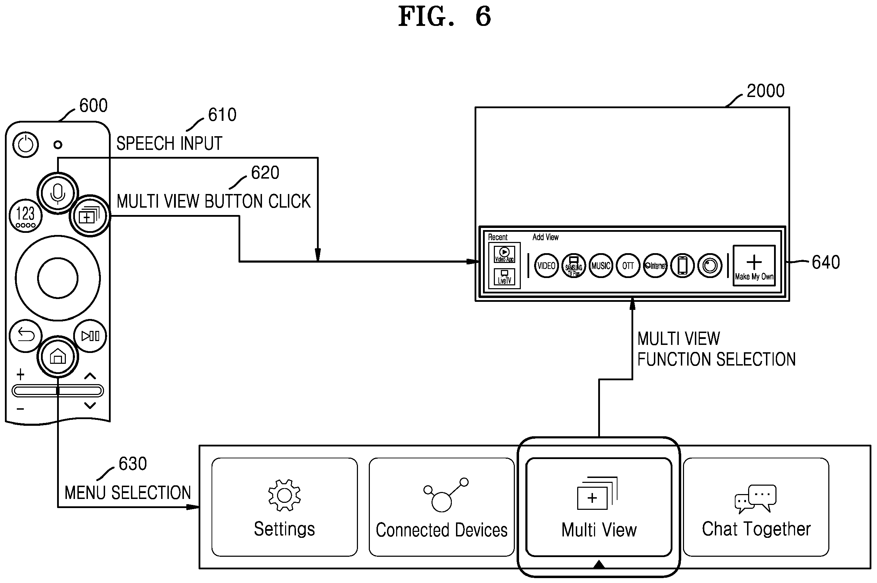

FIG. 6 is a diagram illustrating a method, performed by the electronic device 2000, of executing a multi view function according to an embodiment of the disclosure.

In an embodiment of the disclosure, the electronic device 2000 may receive a command/signal for executing the multi view function through a remote controller 600.

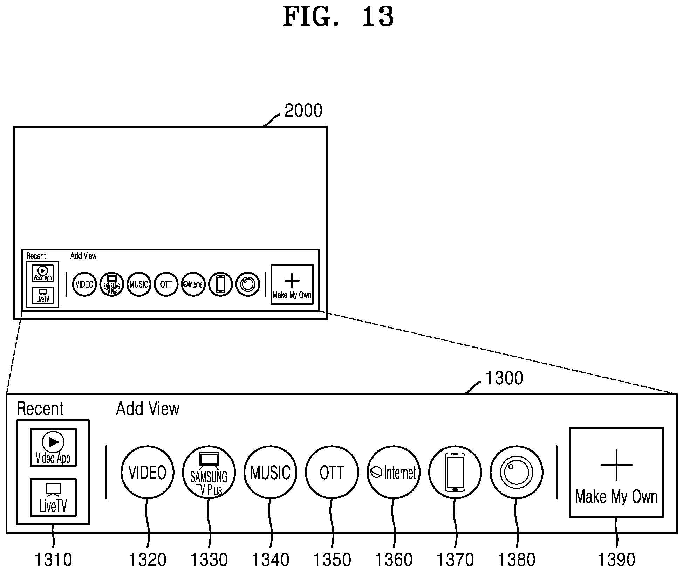

In an embodiment of the disclosure, the multi view function may be executed by a speech input 610. A user of the electronic device 2000 may press a speech command button of the remote controller 600 and input the speech input 610 (e.g., 'turn on the multi view function') for executing the multi view function. When the speech input 610 is received, the electronic device 2000 may execute the multi view function in response. When the multi view function is executed, the electronic device 2000 may display a multi view menu 640. Detailed configurations of the multi view menu 640 will be described in more detail with reference to FIG. 13.

In an embodiment of the disclosure, the multi view function may be executed by a multi view button click 620 of the remote controller 600. When the remote controller 600 of the electronic device 2000 supports a dedicated button for executing the multi view function, the user may press the multi view button of the remote controller 600. The multi view button click 620 is identified, and therefore, the electronic device 2000 may execute the multi view function. When the multi view function is executed, the electronic device 2000 may display the multi view menu 640.

In an embodiment of the disclosure, the multi view function may be executed by a multi view menu selection 630 from among setting menus. The user of the electronic device 2000 may press a home button of the remote controller 600. The home button click is identified, and therefore, the electronic device 2000 may enter a home screen, and then, in response to a request to execute a function menu of the electronic device 2000, display the function menu. The function menu may include, for example, settings, connected devices, a multi view, and chatting, , but is not limited thereto. When the multi view menu selection 630 is identified, the electronic device 2000 may execute the multi view function. When the multi view function is executed, the electronic device 2000 may display the multi view menu 640.

Although an example in which the multi view menu 640 of the electronic device 2000 is executed by the remote controller 600 has been described with reference to FIG. 6, a multi view menu execution method is not limited thereto. For example, the multi view menu may be executed in a different way based on a user input through an input interface of the electronic device 2000 or a multi view execution request from another device connected to the electronic device 2000.

FIG. 7 is a diagram illustrating multi view layouts provided by the electronic device 2000 according to an embodiment of the disclosure.

In an embodiment of the disclosure, there may be a plurality of multi view layouts. When there are a plurality of multi view layouts, the electronic device 2000 may display the plurality of multi view layouts of a multi view menu 700 together in the form of a card (hereinafter, referred to as multi view card). In some embodiments of the disclosure, the multi view card may be a form that shows only a window configuration of a multi view layout, without information about content/app/source to be displayed within the multi view layout.

In an embodiment of the disclosure, when the electronic device 2000 displays the plurality of multi view layouts on the multi view menu 700 as the multi view cards, the multi view card may reflect a type of the multi view layout.

For example, horizontal multi view layouts 710 may be displayed as horizontal multi view cards on the multi view menu 700. Similarly, vertical multi view layouts 720 may be displayed as vertical multi view cards on the multi view menu 700.

In an embodiment of the disclosure, when the electronic device 2000 displays the plurality of multi view layouts on the multi view menu 700 as the multi view cards, the multi view card may indicate the window configuration within the multi view layout. For example, when the multi view layout includes N windows, the electronic device 2000 may reduce the multi view layout by a certain ratio, and display the multi view card such that N window configurations are identifiable in the multi view menu 700 when the multi view layout is executed.

In an embodiment of the disclosure, when the electronic device 2000 displays the plurality of multi view layouts on the multi view menu 700 in the form of the multi view cards, a name 712 of the multi view layout may be displayed together to facilitate identification of the multi view layout. The name 712 of the multi view layout may be previously determined by the electronic device 2000 or may be directly named by the user. For example, when the electronic device 2000 provides a multi view layout for watching content related to sports, 'Sports' which is the name 712 of the multi view layout may be displayed together with the multi view card. Similarly, when the user of the electronic device 2000 generates a multi view layout for watching content related to home workout and names the name 712 of the generated multi view layout as 'home workout', 'home workout' which is the name 712 of the multi view layout may be displayed together with a multi view card.

In an embodiment of the disclosure, the electronic device 2000 may receive a user input for selecting a multi view layout to be executed from among at least one multi view layout displayed on the multi view menu 700. For example, while the electronic device 2000 operates in a first display mode, the user input for selecting the multi view layout to be executed may be received. The electronic device 2000 may identify a type of the selected multi view layout. In this case, when the type of the selected multi view layout corresponds to a second display mode, the electronic device 2000 may rotate a display, switch a display mode to the second display mode, and display multiple contents in the second display using the selected multi view layout.

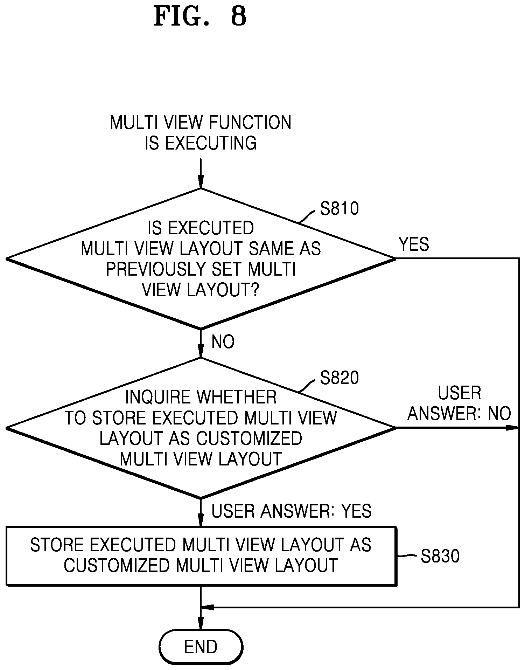

FIG. 8 is a flowchart illustrating an operation of the electronic device 2000 which generates a customized multi view layout according to an embodiment of the disclosure.

In an embodiment of the disclosure, a multi view function executed by the electronic device 2000 may be a multi view layout previously stored in the electronic device 2000. The previously stored multi view layout may include, for example, a previously set multi view layout provided by default in the electronic device 2000 or a multi view layout generated by a user. Alternatively, a new multi view layout that is not stored in the electronic device 2000 may be set and executed by the user. The electronic device 2000 may perform operations for generating the customized multi view layout at any time after the multi view function is being executed. For example, when the multi view function being executed ends, the electronic device 2000 may generate the customized multi view layout.

In operation S810, the electronic device 2000 according to an embodiment of the disclosure may identify whether the executed multi view layout is the same as the previously set multi view layout.

In an embodiment of the disclosure, when the multi view layout is directly configured and executed by the user instead of the previously stored multi view layout being executed, the electronic device 2000 may compare the executed multi view layout with the multi view layout previously stored in the electronic device 2000. When the previously stored multi view layout is executed, the electronic device 2000 may not compare the executed multi view layout with the previously stored multi view layout. When the executed multi view layout is the same as the previously stored multi view layout, the electronic device 2000 may end the operation. When the executed multi view layout is not the same as the previously stored multi view layout, the electronic device 2000 may perform operation S820.

In operation S820, the electronic device 2000 according to an embodiment of the disclosure may inquire of the user whether to store the executed multi view layout as the customized multi view layout. The electronic device 2000 may display a user interface for storing the executed multi view layout.

In operation S830, the electronic device 2000 according to an embodiment of the disclosure may store the executed multi view layout as the customized multi view layout. The electronic device 2000 may store the executed multi view layout as the customized multi view layout when the user answers 'yes' to an inquiry of whether to store the customized multi view layout.

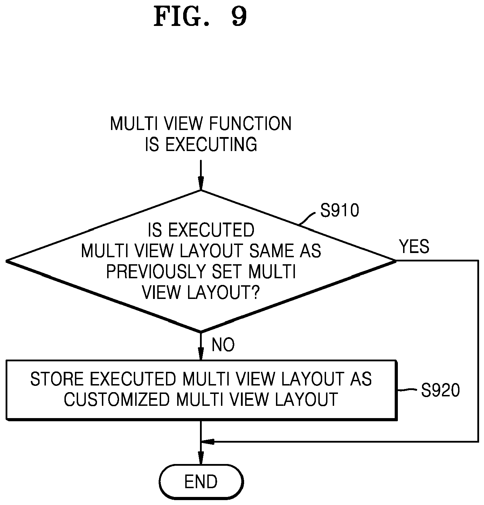

FIG. 9 is a flowchart illustrating an operation of the electronic device 2000 which automatically generates a customized multi view layout according to an embodiment of the disclosure.

According to an embodiment of the disclosure, the electronic device 2000 may automatically generate and store the customized multi view layout, which is the embodiment described above with reference to FIG. 8, without interaction with a user.

In operation S910, the electronic device 2000 according to an embodiment of the disclosure may identify whether an executed multi view layout is the same as a previously stored multi view layout. Operation S910 corresponds to operation S810, and thus the same description thereof will be omitted.

In operation S920, the electronic device 2000 according to an embodiment of the disclosure may store the executed multi view layout as the customized multi view layout. The electronic device 2000 may store the executed multi view layout as the customized multi view layout even when there is no user input as to whether to store the customized multi view layout.

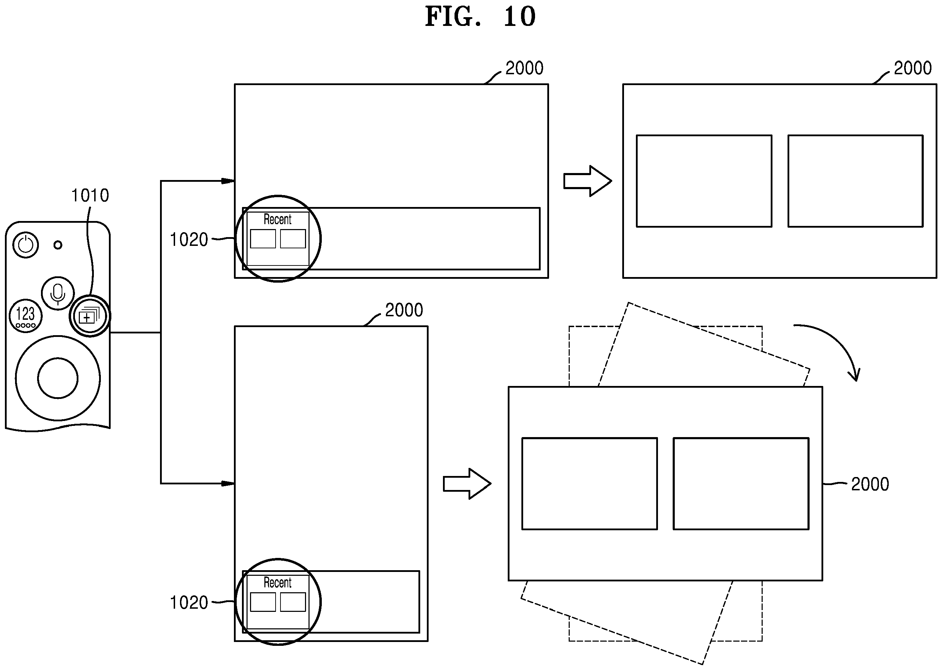

FIG. 10 is a flowchart illustrating an operation of the electronic device 2000 which provides multiple contents using a customized multi view layout 1020 according to an embodiment of the disclosure.

Referring to FIG. 10, an example in which a type of the customized multi view layout is horizontal will be described. An operation of the electronic device 2000 which generates the customized multi view layout 1020 has been described with reference to FIGS. 8 and 9, and thus the same description thereof will be omitted.

Referring to FIG. 10, the electronic device 2000 according to an embodiment of the disclosure may execute a multi view function in response to a user pressing a multi view button 1010 of a remote controller.

In an embodiment of the disclosure, the electronic device 2000 may be operating in a landscape mode. When execution of the multi view function is identified while operating in the landscape mode, the electronic device 2000 may display a multi view menu. In some embodiments of the disclosure, the customized multi view layout 1020 generated according to the above-described embodiments may be displayed on the multi view menu. When displaying the customized multi view layout 1020 on the multi view menu, the electronic device 2000 may display information (e.g., recently generated) about the multi view layout together. The electronic device 2000 may execute the customized multi view layout 1020. In some embodiments of the disclosure, when there are a plurality of multi view layouts stored in the electronic device 2000, the electronic device 2000 may execute the customized multi view layout 1020 based on a user input for selecting the customized multi view layout 1020. Because the electronic device 2000 is operating in the landscape mode and the customized multi view layout 1020 is a horizontal type, the electronic device 2000 may not rotate a display of the electronic device 2000 and may display multiple contents using the customized multi view layout 1020 in the landscape mode.

In an embodiment of the disclosure, the electronic device 2000 may be operating in a portrait mode. When execution of the multi view function is identified while operating in the portrait mode, the electronic device 2000 may display a multi view menu. The electronic device 2000 may execute the customized multi view layout 1020. Because the electronic device 2000 is operating in the portrait mode and the customized multi view layout 1020 is the horizontal type, the electronic device 2000 may rotate the display of the electronic device 2000. The display is rotated, and therefore, the electronic device 2000 may switch a display mode of the electronic device 2000 to the landscape mode, and display multiple contents using the customized multi view layout 1020 in the landscape mode.

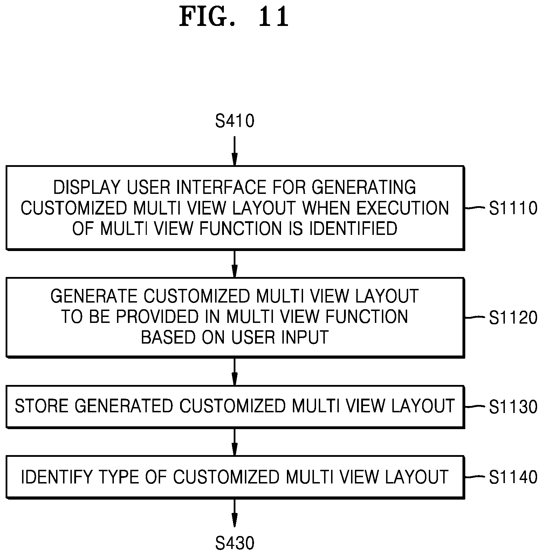

FIG. 11 is a flowchart illustrating an operation of the electronic device 2000 which generates a customized multi view layout based on a user input and displays multiple contents according to an embodiment of the disclosure.

Before operation S1110 of FIG. 11, operation S410of FIG. 4 may be performed. That is, the electronic device 2000 may identify execution of a multi view function while operating in a first display mode.

In operation S1110, the electronic device 2000 according to an embodiment of the disclosure may display a user interface for generating the customized multi view layout. In some embodiments of the disclosure, when the multi view layout stored in the electronic device 2000 does not exist, the electronic device 2000 may display the user interface for generating the customized multi view layout. In some embodiments of the disclosure, the electronic device 2000 may display the user interface for generating the customized multi view layout based on the user input for generating the customized multi view layout.

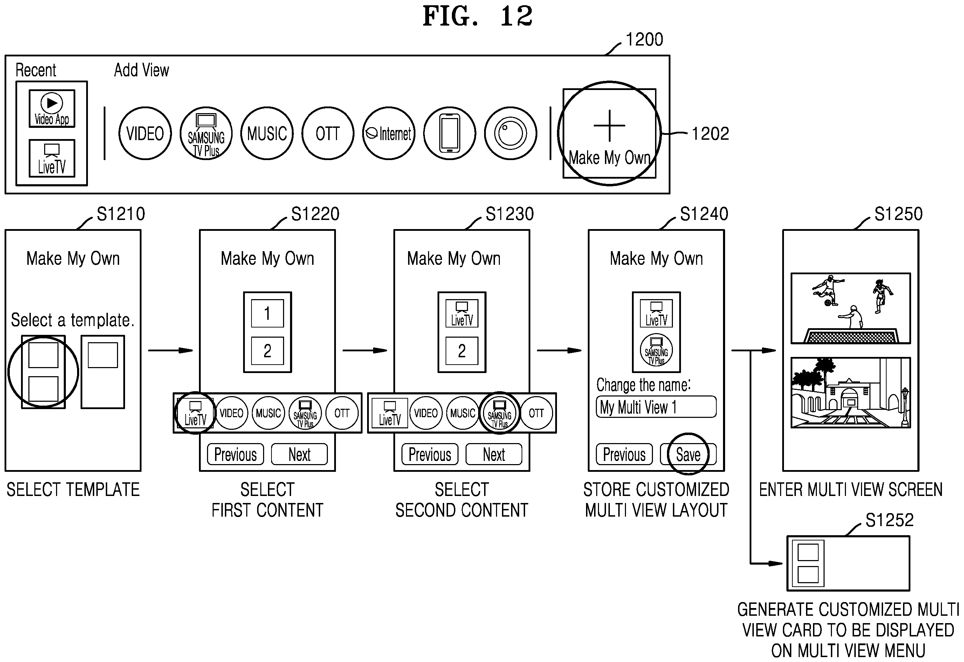

In operation S1120, the electronic device 2000 according to an embodiment of the disclosure may generate the customized multi view layout to be provided in a multi view function based on the user input. Specific operations of the electronic device 2000 which generates the customized multi view layout based on the user input will be further described with reference to FIG. 12.

In operation S1130, the electronic device 2000 according to an embodiment of the disclosure may store the generated customized multi view layout. After generating the customized multi view layout, the electronic device 2000 may display the customized multi view layout on a customized multi view menu when the multi view function is executed by the electronic device 2000.

In operation S1140, the electronic device 2000 according to an embodiment of the disclosure may identify a type of the customized multi view layout. The electronic device 2000 may identify whether the type of the generated customized multi view layout is a horizontal type or a vertical type. After performing operation S1140, the electronic device 2000 may perform operation S430 of FIG. 4.

In an embodiment of the disclosure, when the type of the generated customized multi view layout does not correspond to the current display mode of the electronic device 2000, the electronic device 2000 may rotate a display of the electronic device 2000 and switch a window display mode of the electronic device 2000. The electronic device 2000 may display multiple contents using the customized multi view layout in the switched window display mode.

FIG. 12 is a diagram illustrating an operation of the electronic device 2000 which generates a customized multi view layout based on a user input according to an embodiment of the disclosure.

In an embodiment of the disclosure, a multi view menu 1200 provided by the electronic device 2000 may include a customized multi view layout generation item 1202. When a user input for selecting the customized multi view layout generation item 1202 is received, the electronic device 2000 may display a user interface for generating the customized multi view layout. An operation of the electronic device 2000 which generates the customized multi view layout based on the user input may include operations S1210 to S1240.

Operation S1210 is a template selection operation of generating the customized multi view layout. The electronic device 2000 according to an embodiment of the disclosure may display a user interface capable of selecting a template of a multi view layout. In some embodiments of the disclosure, the electronic device 2000 may display recommendation templates stored in the electronic device 2000 and receive a user input for selecting one of the recommendation templates. In some embodiments of the disclosure, the electronic device 2000 may receive a user input for generating a new template from a user. In operation S1210, an example of selecting a vertical multi view layout including a first window and a second window is described.

Operation S1220 is an operation of selecting first content to be displayed on the customized multi view layout. The electronic device 2000 according to an embodiment of the disclosure may receive a user input for selecting the first content to be displayed on the first window in the multi view layout. The content may be content provided from an application or a source. For example, the selected first content may be content provided by a live TV application.

Operation S1230 is an operation of selecting second content to be displayed on the customized multi view layout. The electronic device 2000 according to an embodiment of the disclosure may receive a user input for selecting the second content to be displayed on the second window in the multi view layout. For example, the selected second content may be content provided by a Samsung TV application.

Operation S1240 is an operation of storing the customized multi view layout. The electronic device 2000 may store the customized multi view layout configured to display the first content on the first window and display the second content on the second window. When the customized multi view layout is stored, the electronic device 2000 may perform operations S1250 and/or operation S1252.

In operation S1250, the customized multi view layout is stored, and therefore, the electronic device 2000 may enter the multi view window. In some embodiments of the disclosure, the electronic device 2000 may identify a type of the customized multi view layout. The electronic device 2000 may rotate the display of the electronic device 2000 based on the type of the customized multi view layout and the current display mode of the electronic device 2000. For example, because the type of the stored customized multi view layout is vertical, when the current display mode of the electronic device 2000 is a landscape mode, the electronic device 2000 may enter the multi view window by rotating the display and switching the display mode to the portrait mode. The operation of the electronic device 2000 which stores the customized multi view layouts and therefore enters the multi view window may be performed in a similar manner to operations S430 to S450 of FIG. 4.

In operation S1252, the electronic device 2000 may generate the customized multi view card to be displayed on the multi view menu. When the customized multi view layout is stored, the electronic device 2000 may generate a customized multi view card to be displayed on the customized multi view menu so that the customized multi view layout is available.

FIG. 13 is a diagram illustrating a configuration of a multi view menu 1300 provided by the electronic device 2000 according to an embodiment of the disclosure.

In an embodiment of the disclosure, when a multi view function is executed, the electronic device 2000 may display the multi view menu 1300.

In an embodiment of the disclosure, the multi view menu 1300 may include at least a thumbnail 1310 of the multi view layout, apps/sources (e.g., a video application 1320, a TV application 1330, a music The application 1340, an OTT application 1350, an Internet application 1360, a smartphone source 1370 and an USB camera source 1380, etc.) to be used in the multi view function, and a customized multi view layout generation item 1390.

The thumbnail 1310 of the multi view layout may include a thumbnail related to a window configuration of the multi view layout and content to be provided on each window of the multi view layout.

In an embodiment of the disclosure, the electronic device 2000 may display the thumbnail 1310 of the multi view layout in the multi view menu 1300. When execution of the multi view function is identified, the electronic device 2000 may display the thumbnail 1310 of the multi view layout on the multi view menu 1300 in order to receive a user input for selecting a multi view layout to be executed.

When a user input for selecting the thumbnail 1310 of the multi view layout is received, the electronic device 2000 may display multiple contents using the multi view layout corresponding to the thumbnail 1310 of the multi view layout. In some embodiments of the disclosure, the electronic device 2000 may identify a type of the multi view layout corresponding to the thumbnail 1310 of the multi view layout, and rotate a display of the electronic device 2000 based on the type of the multi view layout and the current display mode of the electronic device 2000. This has been described above, and thus the same description thereof will be omitted.

In an embodiment of the disclosure, the electronic device 2000 may provide a multi view screen based on a user input for selecting the apps/sources (e.g., the video application 1320, the TV application 1330, the music application 1340, the OTT application 1350, the Internet application 1360, the smartphone source 1370, and the USB camera source 1380, etc.) to be used in the multi view function. For example, the electronic device 2000 may display first content provided from the video application 1320 on a first window of the multi view layout and display second content provided from the USB camera source 1380 on a second window, based on the user input for selecting the video application 1320 and the USB camera source 1380. In some embodiments of the disclosure, when the executed multi view layout is a new multi view layout that is not stored in the electronic device 2000, the electronic device 2000 may store the executed multi view layout. This has been described above with reference to FIGS. 8 and 9, and thus the same description thereof will be omitted.

In an embodiment of the disclosure, the electronic device 2000 may generate a customized multi view layout based on a user input for selecting the customized multi view layout generation item 1390. This has been described above with reference to FIGS. 11 and 12, and thus the same description thereof will be omitted.

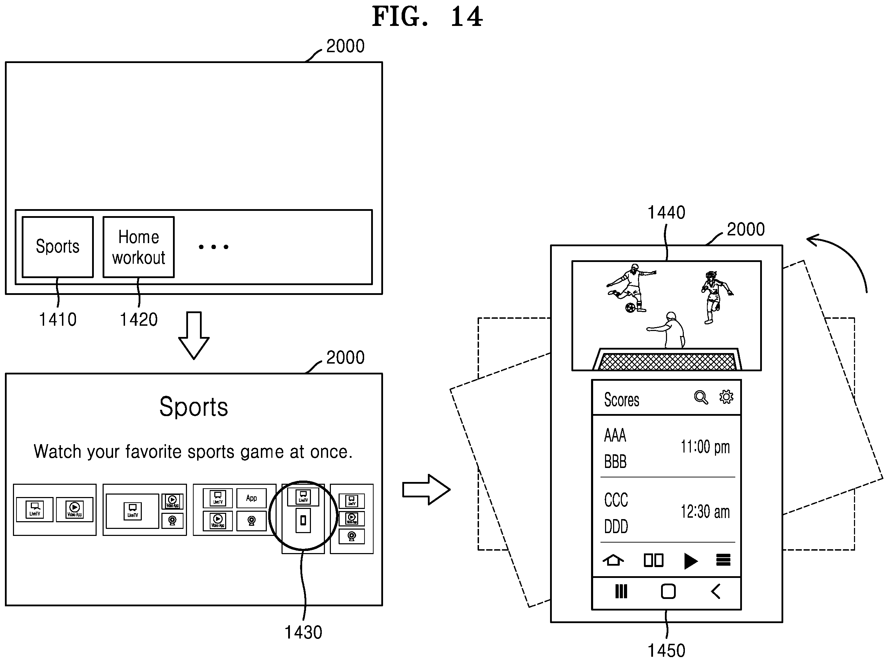

FIG. 14 is a diagram illustrating an operation of the electronic device 2000 which uses a previously set multi view layout according to an embodiment of the disclosure.

Referring to FIG. 14, an example in which a first display mode of the electronic device 2000 is a landscape mode and a second display mode thereof is a portrait mode will be described. In the example of FIG. 14, the electronic device 2000 is operating in a landscape mode, which is the first display mode.

In an embodiment of the disclosure, the electronic device 2000 may provide the multi view layout previously set in the electronic device 2000 to a user. In some embodiments of the disclosure, the previously set multi view layout may be classified and previously set according to a subject of provided content. For example, a subject of the multi view layout may include a 'sports 1410' with multiple contents related to sports, a 'home workout 1420' with multiple contents related to workout that may be done at home, etc.

In an embodiment of the disclosure, when the subject of the multi view layout is selected, the electronic device 2000 may display one or more multi view layouts related to the selected subject. The electronic device 2000 may receive a user input for selecting one from the one or more multi view layouts. For example, the electronic device 2000 may display a first multi view layout to a fifth multi view layout with respect to the sports subject. Here, a fourth multi view layout 1430 may be a vertical multi view layout, in which live TV content on a horizontal window is provided on a first window, and smartphone source content on a vertical window is provided on a second window.

In an embodiment of the disclosure, when the user selects the fourth multi view layout 1430, the electronic device 2000 may identify a type of the selected fourth multi view layout 1430. In this case, because the type of the fourth multi view layout 1430 is vertical, the type of the fourth multi view layout 1430 may correspond to the second display mode (the portrait mode) of the electronic device 2000.

The electronic device 2000 may vertically rotate a display. The display is rotated vertically, and therefore, the electronic device 2000 may switch the display mode of the electronic device 2000 to the second display mode, and display multiple contents in the second display mode, using the fourth multi view layout 1430. For example, the first content provided on the first window may be a soccer match relay 1440 that is content of live TV, and the second content provided on the second window may be information 1450 (e.g., a match time, score, etc.) related to a soccer match that is content of a smartphone source.

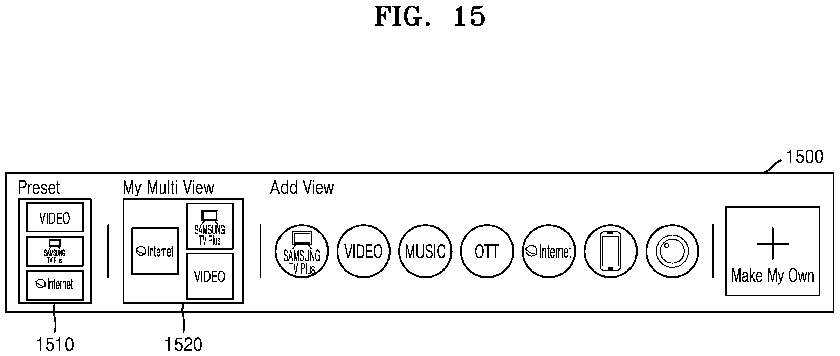

FIG. 15 is a diagram illustrating another configuration of a multi view menu provided by the electronic device 2000 according to an embodiment of the disclosure.

In an embodiment of the disclosure, the electronic device 2000 may classify and display multi view layouts according to kinds of the multi view layouts. In some embodiments of the disclosure, multi view layouts may be classified as a previously set multi view layout provided by default in the electronic device 2000 and a customized multi view layout generated by the electronic device 2000 through the above-described embodiments.

In an embodiment of the disclosure, the electronic device 2000 may classify and display a previously set multi view layout 1510 and a customized multi view layout 1520 on a multi view menu 1500. There may be a plurality of previously set multi view layouts 1510 displayed on the multi view menu 1500. Also, there may be a plurality of customized multi view layouts 1520 displayed on the multi view menu 1500.

The electronic device 2000 may display multiple pieces of digital content using a selected multi view layout based on a user input for selecting the previously set multi view layout 1510 or the customized multi view layout 1520. In some embodiments of the disclosure, when a type of the selected multi view layout does not correspond to the current display mode of the electronic device 2000, the electronic device 2000 may automatically rotate a display. This has already been described in the above embodiments of the disclosure, and thus the same description thereof will be omitted.

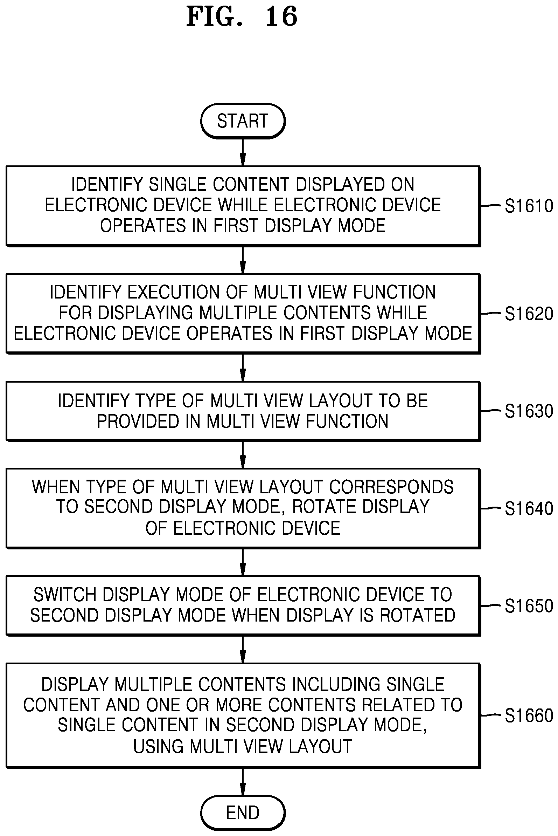

FIG. 16 is a flowchart illustrating an operation of the electronic device 2000 which provides a plurality of related contents in a multi view mode according to an embodiment of the disclosure.

In operation S1610, the electronic device 2000 according to an embodiment of the disclosure may identify single content displayed on the electronic device 2000 while the electronic device 2000 operates in a first display mode.

In an embodiment of the disclosure, the electronic device 2000 may be displaying single content while operating in a normal mode instead of the multi view mode. In this case, the electronic device 2000 may identify the single content displaying thereon. For example, the electronic device 2000 may identify that the single content displaying on the electronic device 2000 is a movie A.

In an embodiment of the disclosure, the electronic device 2000 may obtain information related to the single content displaying on the electronic device 2000. The information related to content may include, for example, a content name, episode information of the content, a genre of the content, a content producer, channel information about which the content is aired, a time when the content is aired, etc., but is not limited thereto, and may include a variety of information related to the characteristics of the content. For example, when the content displaying on the electronic device 2000 is the 'movie A', the electronic device 2000 may obtain the information related to content such as a movie name, a genre, a running time, a screening rating, the number of audiences, cast members, etc.

In operation S1620, the electronic device 2000 according to an embodiment of the disclosure may identify execution of a multi view function for displaying multiple contents while the electronic device 2000 operates in the first display mode. When execution of the multi view function is identified while the electronic device 2000 is displaying the single content, the electronic device may further perform operations S1630 to S1660 to display multiple contents. Operation S1620 corresponds to operation S410 of FIG. 4, and thus the same description thereof will be omitted.

In operation S1630, the electronic device 2000 according to an embodiment of the disclosure may identify a type of the multi view layout to be provided in the multi view function. In some embodiments of the disclosure, the multi view layout to be provided in the multi view function may be a previously set multi view layout provided by the electronic device 2000. Operation S 1630 corresponds to operation S420 of FIG. 4, and thus the same description thereof will be omitted.

In operation S1640, when the type of the multi view layout corresponds to a second display mode, the electronic device 2000 may rotate the display of the electronic device 2000. Operation S1640 corresponds to operation S430 of FIG. 4, and thus the same description thereof will be omitted.

In operation S1650, the display is rotated, and therefore, the electronic device 2000 according to an embodiment of the disclosure may switch a display mode of the electronic device 2000 to the second display mode. Operation S1650 corresponds to operation S440 of FIG. 4, and thus the same description thereof will be omitted.

In operation S1660, the electronic device 2000 according to an embodiment of the disclosure may display multiple contents including the single content and one or more contents related to the single content in the second display mode, using the multi view layout. The electronic device 2000 may determine contents to be provided in the multi view layout based on the information related to the single content. For example, when the single content is the 'movie A' as described in operation S1610, the 'movie A' may be displayed on a first window of the multi view layout, content including information related to the 'movie A' may be displayed on a second window, and another content displaying another information related to the 'movie A' may be displayed on a third window.

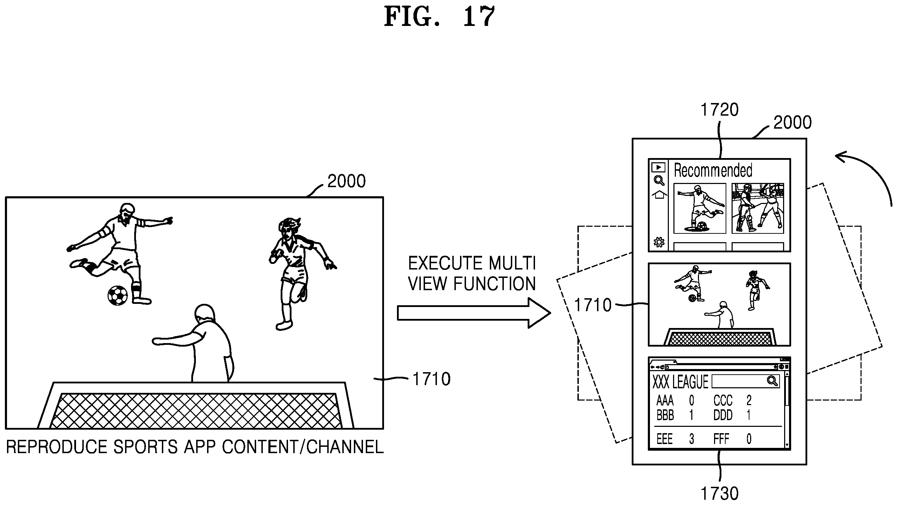

An embodiment in which the electronic device 2000 displays multiple contents including single content and one or more contents related to the single content will be further described with reference to FIG. 17.

FIG. 17 is a diagram illustrating an operation of the electronic device 2000 which provides a plurality of related contents in a multi view mode according to an embodiment of the disclosure.

Referring to FIG. 17, an example in which a first display mode of the electronic device 2000 is a landscape mode and a second display mode is a portrait mode will be described.

In an embodiment of the disclosure, the electronic device 2000 may identify single content displayed on the electronic device 2000 while the electronic device 2000 operates in the landscape mode. For example, the electronic device 2000 may identify that the single content displaying on the electronic device 2000 is a soccer match relay that is sports content. In some embodiments of the disclosure, the electronic device 2000 may obtain a channel name, soccer game information (team information, player information, match time information, etc.), etc. that are information related to content.

In an embodiment of the disclosure, the electronic device 2000 may identify execution of a multi view function for displaying multiple contents while the electronic device 2000 operates in the landscape mode. The execution of the multi view function is identified, and therefore, the electronic device 2000 may identify a type of a multi view layout to be provided by the electronic device 2000. When there are a plurality of multi view layouts that may be provided by the electronic device 2000, the electronic device 2000 may receive a user input for selecting a multi view layout and identify a type of the selected multi view layout. In some embodiments of the disclosure, when there are a plurality of multi view layouts that may be provided by the electronic device 2000, the electronic device 2000 may automatically select any one suitable multi view layout and identify a type of the selected multi view layout. In an embodiment of the disclosure, the identified type of the multi view layout may be a vertical type.

In an embodiment of the disclosure, because the type of the multi view layout corresponds to the vertical type, the electronic device 2000 may rotate a display of the electronic device 2000. The display of the electronic device 2000 is vertically rotated, and therefore, the electronic device 2000 may switch a display mode of the electronic device 2000 to the portrait mode.

The electronic device 2000 may display multiple contents including a single content and one or more contents related to the single content in the portrait mode by using the multi view layout. For example, the electronic device 2000 may display soccer match relay content on a first window 1710, display content that shows recommended videos for watching other soccer matches on a second window 1720, and display content indicating information related to a soccer match currently in progress on a third window 1730.

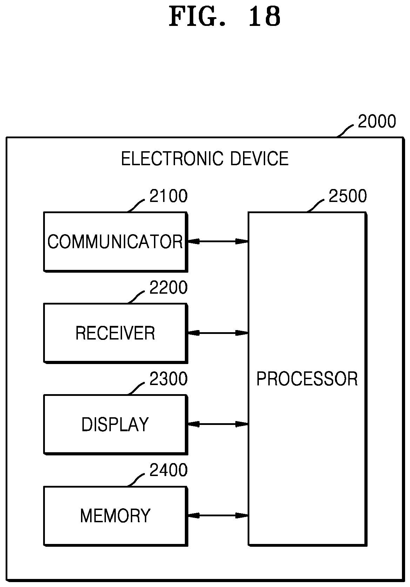

FIG. 18 is a block diagram illustrating a configuration of the electronic device 2000 according to an embodiment of the disclosure.

Referring to FIG. 18, the electronic device 2000 according to an embodiment of the disclosure may include a communicator 2100, a receiver 2200, a display 2300, a memory 2400, and a processor 2500.

The communicator 2100 may perform data communication with other electronic devices under the control of the processor 2300. The communicator 2100 may include a communication circuit capable of performing data communication with another electronic device using at least one of data communication methods including, for example, wired LAN, wireless LAN, Wi-Fi, Bluetooth, ZigBee, Wi-Fi Direct (WFD), Infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig) and RF communication.

The receiver 2200 may receive an image, video, audio, etc. from the outside of the electronic device 3000 under the control of the processor 2500.

The receiver 2200 may include at least one of, for example, a High-Definition Multimedia Interface (HDMI) port, a component jack, PC port, a display port, or a USB port.

The display 2300 may output an image signal to a screen of the electronic device 2000 under the control of the processor 2500. The electronic device 2000 may display multiple contents on the display 2300 using a multi view layout. In an embodiment of the disclosure, the display 2300 may be a rotatable display as a horizontal display and a vertical display. In some embodiments of the disclosure, the processor 2500 may rotate the display 2300 by controlling a motor (not shown) included in the electronic device 2000. In some embodiments of the disclosure, the processor 2500 may rotate the display 2300 by transmitting a control command to a rotation module (not shown) attached to the display 2300 of the electronic device 2000 using the communicator 2100.

The memory 2400 may include a flash memory type, a hard disk type, a multimedia card micro type, and a card type memory (e.g., SD or XD memory), a nonvolatile memory including at least one of Read-Only Memory (ROM), Electrically Erasable Programmable Read-Only Memory (EEPROM), Programmable Read-Only Memory (PROM), magnetic memory, magnetic disk, or optical disk, and a volatile memory such as random access memory (RAM) or static random access memory (SRAM).

The memory 2400 according to an embodiment of the disclosure may store one or more instructions or programs to operate to display multiple contents. In some embodiments of the disclosure, one or more applications installed in the electronic device 2000 may be stored in the memory 2400. The applications may be, for example, an OTT media service application, a video application, a game application, etc. In some embodiments of the disclosure, the memory 2400 may store one or more multi view layouts. The one or more multi view layouts may include, for example, a previously set multi view layout provided by default in the electronic device 2000 or a multi view layout generated by a user.

The processor 2500 may control overall operations of the electronic device 2000. For example, the processor 2500 may execute one or more instructions of a program stored in the memory 2200 to control overall operations of the electronic device 2000 to display multiple contents using a multi view layout.

The processor 2500 may be configured as at least one of, for example, a central processing unit, a microprocessor, a graphic processing unit, application specific integrated circuits (ASICs), digital signal processors (DSPs), digital signal processing devices (DSPDs), programmable logic devices (PLDs), field programmable gate arrays (FPGAs), an application processor, a neural processing unit, or an artificial intelligence-only processor designed with a hardware structure specialized for processing of an artificial intelligence model, but is not limited thereto.

In an embodiment of the disclosure, the processor 2500 may identify the current display mode of the display 2300. For example, the processor 2500 may identify that the display 2300 is in a landscape mode or a portrait mode.

In an embodiment of the disclosure, the processor 2500 may execute a multi view function. The processor 2500 may receive an execution command/signal of the multi view function from another device (e.g., a smart phone, a personal computer, etc.) connected to the electronic device 2000 wirelessly and/or by wire, receive an execution command/signal of the multi view function from a device (e.g., a remote controller, etc.) for controlling the electronic device 2000, or receive an execution input of the multi view function from an input interface (e.g., a touch screen, etc.) of the electronic device 2000.

In an embodiment of the disclosure, the processor 2500 may compare a type of the multi view layout to be executed with the current display mode of the display 2300. For example, when the type of multi view layout to be executed corresponds to the current display mode of the display 2300, the processor 2500 may have multiple contents to display on the multi view layout without rotating the display 2300. In addition, when the type of multi view layout to be executed corresponds to a display mode different from the current display mode of the display 2300, the processor 2500 may rotate the display 2300, switch the display mode to correspond to the rotated display 2300, and have multiple contents to display on a multi view layout of the switched display mode.

In an embodiment of the disclosure, the processor 2500 may rotate the display 2300 by controlling a motor (not shown) included in the electronic device 2000 or transmitting a control command to a rotating module (not shown) attached to the display 2300 of the electronic device 2000.

Specific operations of the processor 2500 which rotates the display 2300 based on the display mode of the display 2300 and the type of the multi view layout and displays multiple contents have been described in detail with reference to the foregoing drawings and descriptions thereof, and thus the same descriptions thereof will be omitted.

Meanwhile, the block diagram of the display device 2000 illustrated in FIG. 18 is a block diagram for an embodiment of the disclosure. Components included in the block diagram may be integrated, added, or omitted depending on specification of the implemented display device 2000. That is, two or more components may be combined into one component, or one component may be subdivided into two or more components as needed. In addition, functions performed by each block are illustrating the embodiments of the disclosure, and specific operations or apparatuses thereof do not limit the scope of the disclosure.

The operating method of the display device 2000 according to an embodiment of the disclosure may be implemented in the form of program commands that may be executed through various computer means, and be recorded on a computer-readable medium. The computer-readable medium may include program commands, data files, data structures, or combinations thereof. The program commands recorded on the medium may be those specially designed and constructed for the purposes of the disclosure, or they may be of the kind well known and available to one of ordinary skill in the art of computer software. Examples of the computer-readable recording medium include magnetic media (e.g., hard disks, floppy disks, and magnetic tape), optical media (e.g., CD-ROMs or DVDs), magneto-optical media (e.g., floptical disks), and hardware devices (e.g., ROMs, RAMs, or flash memories, etc.) that are specially configured to store and execute program commands. Examples of the program commands include both machine code, such as produced by a compiler, and high-level language code that may be executed by the computer using an interpreter. A computer-readable medium may be provided in the form of a non-transitory recording medium. The non-transitory recording medium means that the recording medium is a tangible device and does not include signals (e.g., electromagnetic waves), and this term does not limit that data is semi-permanently or temporarily stored in the recording medium. For example, a 'non-transitory storage medium' may include a buffer storing data temporarily.

In addition, the operating method of the display device 2000 according to embodiments of the disclosure may be included and provided in a computer program product. The computer program product may be traded as a product between a seller and a purchaser.

The computer program product may include a software program and a computer-readable storage medium storing the software program. For example, the computer program product may include a product (e.g., a downloadable application) in the form of software program electronically distributed by a device manufacturer or an electronic market. For electronic distribution of the computer program product, at least part of the software program may be stored in a storage medium or temporarily generated. In this case, the storage medium may be a storage medium of a server of the manufacturer, a server of the electronic market, or a storage medium of a relay server that temporarily stores the software program.

The computer program product may include a storage medium of a server or a storage medium of a client device in a system including the server and the client device. Alternatively, when there is an external device (e.g., a smart phone) capable of being communicatively connected to the server or the client device, the computer program product may include a storage medium of the external device. Alternatively, the computer program product may include a S/W program transmitted from the server to the client device or the external device or transmitted from the external device to the client device.

In this case, the server, the client device, or the external device may execute the computer program product to perform the methods according to the embodiments of the disclosure. Alternatively, two or more among the server, the client device, and the external device may execute the computer program product to perform the methods according to the embodiments of the disclosure in a distributed method.

For example, the server (e.g., a cloud server or an artificial intelligence server) may execute the computer program product stored in the server to control the client device communicatively connected thereto to perform the methods according to the embodiments of the disclosure.

While the embodiments of the disclosure have been described in detail, the scope of the disclosure is not limited thereto, and it will be understood by those of ordinary skill in the art that various changes in form and details may be made therein without departing from the spirit and scope as defined by the following claims.

## Claims

1. A method for displaying multiple pieces of content on a single display of an electronic device, the method comprising:
receiving, from a user interface, a request for a multi view function for displaying the multiple pieces of content while the electronic device operates in a first display mode;
receiving, from the user interface, a selection of a type of a multi view layout to be provided in the multi view function;
automatically rotating the display of the electronic device when the type of the multi view layout corresponds to a second display mode;
switching a display mode of the electronic device to the second display mode when the display is automatically rotated; and
displaying the multiple pieces of content in the second display mode, by using the multi view layout,
wherein the first display mode is any one of a landscape mode and a portrait mode, and the second display mode is the other one of the landscape mode and the portrait mode.

2. The method of claim 1, wherein the type of the multi view layout comprises a horizontal layout and a vertical layout.

3. The method of claim 2, further comprising:
comparing whether the requested multi view layout is same as a previously stored multi view layout; and
based on a result of the comparing, displaying a user interface for storing the requested multi view layout as a customized multi view layout.

4. The method of claim 2, further comprising:
comparing whether the requested multi view layout is same as a previously stored multi view layout; and
when the requested multi view layout is different from the previously stored multi view layout, storing the requested multi view layout.

5. The method of claim 2, further comprising:
displaying a user interface for generating a customized multi view layout when the receiving the request for the multi view function is received;
generating a customized multi view layout to be provided in the multi view function based on a user input; and
storing the generated customized multi view layout in a memory.

6. The method of claim 2, further comprising: displaying a thumbnail of the at least one multi view layout so as to receive the input for selecting the multi view layout to be executed, when the request for the multi view function is received.

7. The method of claim 6,
wherein the at least one multi view layout comprises at least one of a multi view layout previously set in the electronic device or a customized multi view layout generated by a user,
wherein the displaying of the thumbnail of the multi view layout comprises classifying and displaying a thumbnail of the previously set multi view layout and a thumbnail of the customized multi view layout.

8. An electronic device for displaying multiple pieces of content on a display of the electronic device, the electronic device comprising:
the display;
a memory storing one or more instructions; and
one or more processors configured to execute the one or more instructions stored in the memory to:
receive, from a user interface, a request for a multi view function for displaying the multiple pieces of content while the electronic device operates in a first display mode;
receive, from the user interface, a selection of a type of a multi view layout to be provided in the multi view function;
automatically rotate the display of the electronic device when the type of the multi view layout corresponds to a second display mode;
switch a display mode of the electronic device to the second display mode when the display is automatically rotated; and
control the display to display the multiple pieces of content in the second display mode, by using the multi view layout,
wherein the first display mode is any one of a landscape mode and a portrait mode, and the second display mode is the other one of the landscape mode and the portrait mode.

9. The electronic device of claim 8, wherein the type of the multi view layout comprises a horizontal layout and a vertical layout.

10. The electronic device of claim 9, wherein the processor is further configured to execute the one or more instructions to
compare whether the requested multi view layout is same as a previously stored multi view layout; and
based on a result of the comparing, control the display to display a user interface for storing the requested multi view layout as a customized multi view layout.

11. The electronic device of claim 9, wherein the one or more processors are further configured to execute the one or more instructions to
compare whether the requested multi view layout is same as a previously stored multi view layout; and
when the requested multi view layout is different from the previously stored multi view layout, store the requested multi view layout.

12. The electronic device of claim 9, wherein the one or more processors are further configured to execute the one or more instructions to
control the display to display a user interface for generating a customized multi view layout when the receive the request for the multi view function is received;
generate a customized multi view layout to be provided in the multi view function based on a user input; and
store the generated customized multi view layout in the memory.

13. The electronic device of claim 9, wherein the one or more processors are further configured to execute the one or more instructions to display a thumbnail of the at least one multi view layout so as to receive the input for selecting the multi view layout to be executed when the request for the multi view function is received.

14. The electronic device of claim 13,
wherein the at least one multi view layout comprises at least one of a multi view layout previously set in the electronic device or a customized multi view layout generated by a user,
wherein the one or more processors are further configured to execute the one or more instructions to control the display to classify and display a thumbnail of the previously set multi view layout and a thumbnail of the customized multi view layout.

15. A computer-readable recording medium having recorded thereon a program for executing the method of any one of claims 1 to 7 on a computer.
